# DEMANDE DE BREVET EUROPEEN

(11) **EP 0 953 473 A1**
(43) Date de publication de la demande: **03.11.1999**
(21) Numéro de dépôt: 99400770.6
(22) Date de dépôt: 30.03.1999
(51) Int. Cl.: B60M 1/28, H02G 1/00

(54) **Dispositif pour redresser les fils rigides et en particulier les fils de contact de caténaires**

(30) Priorité: 30.04.1998 FR 9805502
(71) Demandeur: DUBUIS Société Anonyme, F-41007 Blois Cedex (FR)
(72) Inventeur: Guillou, Eric, 41000 Blois (FR); Machet, Jérôme, 41000 Blois (FR)
(74) Mandataire: Chambon, Gérard

(57) **Abrégé**

L'invention concerne un dispositif de redressement d'un fil rigide (16) et en particulier un fil de contact de caténaire, qui est remarquable en ce qu'il comporte d'une part, une monture (1) dans laquelle est disposée une matrice fixe (3) profilée et d'autre part, un organe de pression (2) constitué d'une matrice mobile (11) ayant un profil de forme complémentaire au profil de la matrice fixe et qui est montée sur une embase (8) dont elle peut s'écarter sous l'action d'un vérin d'actionnement (9,10), la monture (1) de la matrice fixe (3) et l'embase (8) de la matrice mobile (11) étant pourvues de moyens complémentaires de solidarisation afin de permettre de les solidariser entre elles après avoir disposé le fil à redresser entre lesdites matrices, ledit fil pouvant ainsi être serré entre ces dernières.

## Description

L'invention concerne un dispositif pour redresser les fils rigides et en particulier les fils de contact de caténaires.

Une caténaire est pourvue d'au moins un fil de contact rigide qui est parcouru par un courant électrique.

Le courant électrique est transmis à la motrice à alimenter grâce au contact physique du pantographe de la motrice avec le fil de contact de la caténaire, le retour du courant étant assuré par la voie ferrée.

Il est clair que dans un système de ce type le point critique du circuit électrique se situe au niveau de la liaison entre le pantographe et le fil de contact du fait de la mobilité et du frottement dudit pantographe sur ledit fil de contact.

Il arrive que le fil de contact présente des déformations formant des bosses ou des creux appelés "coques", déformations qui sont dues à des problèmes lors du déroulage du fil au cours de sa mise en place, ou suite à sa manipulation et l'utilisation d'outils lors de réparations.

Il est clair que ce type de déformation peut créer une rupture de liaison électrique au moment du passage du pantographe sur la zone déformée tandis que la reprise de contact après ladite déformation provoque un arc électrique qui crée un point d'usure sur le fil de contact.

Pour supprimer ce type de déformation, on a déjà imaginé un système mécanique dénommé "décoqueur" prenant appui sur le fil en trois points, mais ce système est d'utilisation délicate et, en outre, s'il redresse en partie la "coque" à supprimer, il en crée trois autres aux endroits des points d'appui.

C'est pourquoi actuellement, on utilise comme chez les carrossiers, une massette et un tas mais il est clair qu'un redressement avec ce type d'outils est non seulement délicat, surtout sur des fils de contact en cuivre-cadnium, mais sa précision est discutable du fait que la rectitude du fil obtenue est laissée à l'appréciation de l'opérateur.

Les inventeurs ont cherché et mis au point un dispositif qui permet de donner ou redonner au fil de contact sa rectitude initiale, qui est facilement transportable, d'une mise en oeuvre aisée et qui est en outre utilisable sur tous les types de fil de contact, neufs ou en partie usés.

Un tel dispositif doit en outre être utilisable sur un fil sans que l'on soit obligé de démonter ledit fil.

Le dispositif de redressement selon l'invention est notamment remarquable en ce qu'il comporte d'une part, une monture dans laquelle est disposée une matrice fixe profilée et d'autre part, un organe de pression constitué d'une matrice mobile ayant un profil de forme complémentaire au profil de la matrice fixe et qui est montée sur une embase dont elle peut s'écarter sous l'action d'un vérin d'actionnement, la monture de la matrice fixe et l'embase de la matrice mobile étant pourvues de moyens complémentaires de solidarisation afin de permettre de les solidariser entre elles après avoir disposé le fil à redresser entre lesdites matrices, ledit fil pouvant ainsi être serré entre ces dernières.

Avantageusement, le corps du vérin d'actionnement de la matrice mobile est solidaire de l'embase tandis que sa tige traverse ladite embase et est fixée par son extrémité au-dessous de ladite matrice, et la matrice mobile est en outre guidée en translation pour empêcher sa rotation.

Selon un mode de réalisation, les moyens pour solidariser entre elles la monture de la matrice fixe et l'embase de la matrice mobile sont constitués par des nervures aménagées sur la monture ou respectivement l'embase et des rainures correspondantes ménagées sur l'embase ou respectivement la monture, de telle sorte que l'assemblage des pièces s'effectue par emboîtement et translation latérale des nervures dans les rainures.

De préférence, la monture de la matrice fixe se présente sous la forme d'un étrier en U, ladite matrice étant disposée dans le fond du U de telle sorte que la monture vient chevaucher le fil à redresser, les ailes du U venant de part et d'autre de ce dernier et dans ce cas, pour un mode de réalisation tel que mentionné ci-avant, les nervures et les rainures de solidarisation de la monture et de l'embase sont constituées respectivement, par des rebords en équerre ménagés à l'extrémité des ailes de la monture en U, et par des rainures correspondantes en L ménagées dans l'embase.

Par exemple, les rebords en équerre des ailes de la monture présentent des butées à l'une de leurs extrémités pour servir de butées de fin de course de translation lors de l'assemblage de la monture et de l'embase de manière à assurer une retenue et un centrage des deux éléments assemblés et les extrémités de la monture sont partiellement fermées afin d'assurer juste le passage du fil et ainsi son centrage longitudinal, tandis qu'éventuellement les ailes de la monture sont partiellement ajourées pour permettre d'apercevoir le fil à redresser.

De préférence, pour permettre une certaine adaptation, selon les déformations et/ou les fils à redresser, les matrices fixe et mobile sont disposées respectivement dans la monture et sur le vérin d'actionnement de manière amovible.

Les profils des matrices sont tout particulièrement étudiés pour assurer un bon redressement du fil et il a été trouvé très avantageux que les profils des matrices présentent une courbure centrale, convexe pour l'un et respectivement concave pour l'autre, avec des extrémités rectilignes raccordées à ladite courbure centrale par des petites zones courbées en sens inverse par rapport à ladite courbure centrale.

Le vérin d'actionnement peut bien entendu être de tout type mais il est avantageusement hydraulique.

L'invention sera bien comprise et d'autres particularités apparaîtront à la lecture de la description qui va suivre et qui se réfère aux dessins annexés dans lesquels:
- la figure 1 montre en perspective un dispositif selon l'invention, en position de travail sur un fil,
- la figure 2 montre le dispositif de la figure 1 avant assemblage, avec les deux éléments du dispositif séparés,
- les figures 3 et 4 montrent en perspective et de manière agrandie par rapport aux figures 1 et 2, respectivement la monture avec sa matrice fixe et l'organe de pression,
- la figure 5 est une vue en bout du dispositif selon l'invention après assemblage des éléments,
- la figure 6 est une vue du dispositif de la figure 5 après rotation de 90° autour de l'axe du vérin et avec une coupe longitudinale de la monture.

Le dispositif selon l'invention, destiné à redresser plus spécialement mais non exclusivement un fil de contact de caténaire, comporte deux éléments distincts à savoir une monture 1 et un organe de poussée 2.

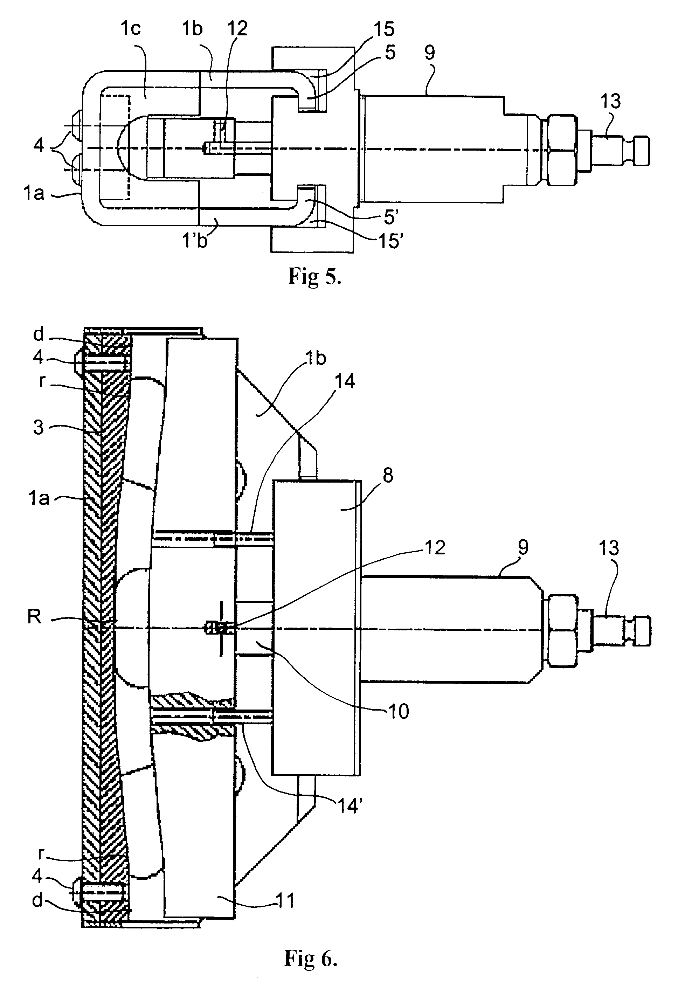

Dans la monture 1, est montée une matrice fixe 3 dont le profil particulier apparaît bien visiblement sur la figure 6 et dont il sera question plus en détail ci-après.

La monture 1 se présente sous la forme d'un étrier en forme de U constitué d'un fond 1a et de deux ailes latérales 1b et 1'b.

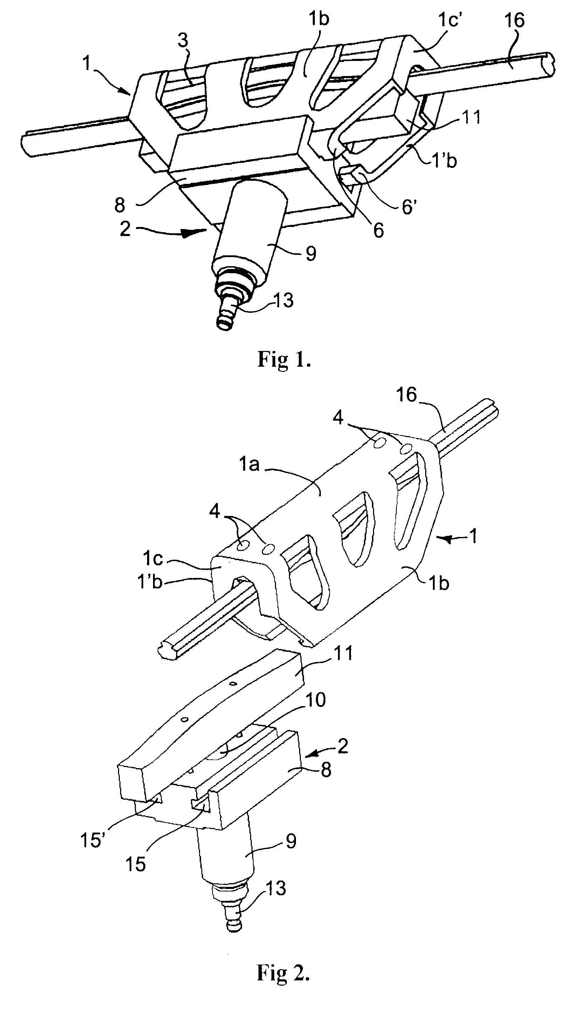

La matrice 3 est fixée dans le fond la de la monture, de manière amovible, au moyen, par exemple, de vis 4 (figures 2, 5 et 6).

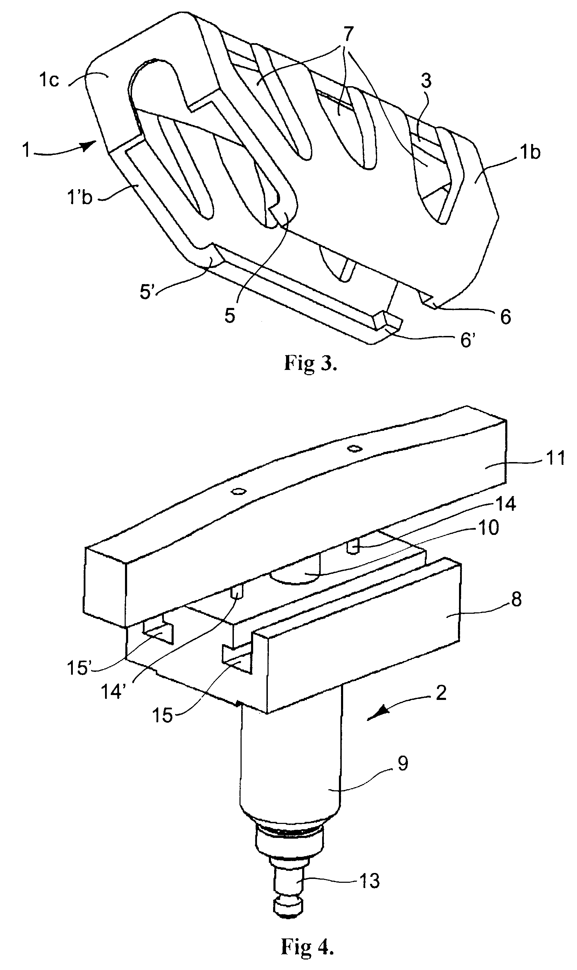

Les ailes 1b, 1'b de la monture 1 se terminent par un rebord 5, 5' en équerre et tourné vers l'intérieur (figure 3) tandis que chaque rebord est pourvu à l'une des extrémité de la monture d'une butée 6, 6' (figure 1 et 3).

En outre, les ailes 1b, 1'b de la monture 1 présentent dans le mode de réalisation représenté, des ajours ou fenêtres 7 et les extrémités de ladite monture 1 sont partiellement fermées par des guides arrondis 1c, 1'c dont il sera question plus loin.

L'organe de poussée comporte une embase 8 solidaire du corps 9 d'un vérin dont la tige 10 traverse ladite embase 8 pour venir se fixer par son extrémité sur le dessous d'une matrice 11 au moyen, par exemple, d'une vis 12 (figures 5 et 6).

Le vérin constitué par le corps 9 et la tige 10 est généralement hydraulique simple effet et il peut se brancher sur une source hydraulique au moyen d'un raccord 13 prévu à l'extrémité dudit corps 9.

La source hydraulique est, par exemple, prévue pour assurer une pression de 700 bars tandis que le vérin peut développer un effort de 4100 DaN.

La matrice 11 actionnée par la tige 10 de vérin est donc mobile et peut s'écarter de l'embase 8.

La matrice 11 est en outre guidée en translation et donc fixe en rotation, par exemple au moyen de tiges 14, 14' solidaires de l'embase 8 et qui coulissent dans des logements correspondants de la matrice 11, mais réciproquement, les tiges précitées pourraient être solidaires de la matrice et coulisser dans ladite embase 8 (figures 4 et 6).

L'embase 8 est pourvue de deux rainures longitudinales 15, 15' (figures 2, 4 et 5) de section en L et de dimensions correspondantes aux rebords 5, 5' de la monture 1 pour les raisons qui seront précisées également ci-après.

L'utilisation du dispositif selon l'invention est simple à comprendre.

La monture 1 est positionnée sur le fil de contact 16 à redresser (figures 1 et 2), ses ailes 1b, 1'b venant de part et d'autre dudit fil sur lequel repose la matrice fixe 3.

On comprend qu'aucun des éléments du dispositif n'est enfilé et que la monture peut être positionnée sans avoir à démonter le fil.

Etant donné la géométrie de la monture, celle-ci, du fait de son centre de gravité relativement bas, reste en équilibre stable sur le fil, ce qui favorise la manoeuvre.

Les guides arrondis 1c aménagés aux extrémités de la monture 1 assurent un centrage longitudinal automatique de la monture sur le fil 16 et les fenêtres 7 permettent de bien positionner la monture 1 et sa matrice 3 à l'endroit voulu, le fil étant visible par lesdites fenêtres.

Ensuite, l'embase 8 de l'organe 2 est glissée latéralement comme on peut le comprendre avec la figure 2, les rebords 5, 5' des ailes 1b, 1'b de la monture venant glisser dans les rainures correspondantes 15, 15' de ladite embase 8, assurant ainsi un accrochage des deux éléments entre eux, la translation relative des éléments s'effectuant jusqu'au contact des butées 6, 6' avec l'embase 8 comme le montre plus particulièrement la figure 1.

Non seulement les butées 6, 6' en servant de butées de fin de course empêchent toute translation intempestive supplémentaire, mais elles permettent aussi d'assurer un bon centrage des éléments et donc des deux matrices entre elles.

Il suffit alors d'alimenter le corps 9 du vérin pour que la matrice mobile 11 s'écarte de l'embase 8 et presse fortement le fil 16 qui est ainsi serré entre les deux matrices jusqu'à un complet redressement dudit fil, l'effort d'écrasement étant calculé pour redresser correctement le fil sans déformer sa section.

Selon la nature du fil 16 et/ou de la déformation à traiter, on choisit les matrices 3 et 11 en conséquence, celles-ci étant amovibles grâce à la fixation par vis (4 et respectivement 12).

Pour une bosse ou un creux, il a en outre été trouvé tout à fait intéressant de prévoir pour les matrices le profil visible sur la figure 6.

On constate en effet sur cette figure 6 que les matrices 3 et 11 présentent une courbure centrale ou arc de rayon "R" et deux zones d'extrémité rectilignes "d" raccordées à la courbure centrale par des courbures "r" de sens inverse.

Il est clair bien sûr qu'à une partie concave pour l'une des matrices, correspond une partie convexe pour l'autre.

On peut bien entendu aussi, selon la nature de la déformation, intervertir les formes des matrices et/ou renverser les deux éléments, de telle sorte que la matrice fixe 3 soit positionnée sous le fil 16.

Enfin, pour retirer le dispositif après utilisation, on comprend aisément qu'il suffit de réaliser les opérations inverses après avoir effectué un retour de la tige 10 de vérin.

## Revendications

1. Dispositif de redressement d'un fil rigide (16) et en particulier un fil de contact de caténaire, *caractérisé* en ce qu'il comporte d'une part, une monture (1) dans laquelle est disposée une matrice fixe (3) profilée et d'autre part, un organe de pression (2) constitué d'une matrice mobile (11) ayant un profil de forme complémentaire au profil de la matrice fixe et qui est montée sur une embase (8) dont elle peut s'écarter sous l'action d'un vérin d'actionnement (9,10), la monture (1) de la matrice fixe (3) et l'embase (8) de la matrice mobile (11) étant pourvues de moyens complémentaires de solidarisation afin de permettre de les solidariser entre elles après avoir disposé le fil à redresser entre lesdites matrices, ledit fil pouvant ainsi être serré entre ces dernières.

2. Dispositif selon la revendication 1, *caractérisé* en ce que le corps (9) du vérin d'actionnement de la matrice mobile (11) est solidaire de l'embase (8) tandis que sa tige (10) traverse ladite embase et est fixée par son extrémité au-dessous de ladite matrice (11).

3. Dispositif selon la revendication 2, *caractérisé* en ce que la matrice mobile (11) est en outre guidée (14,14') en translation pour empêcher sa rotation.

4. Dispositif selon l'une des revendications 1 à 3, *caractérisé* en ce que les moyens pour solidariser entre elles la monture (1) de la matrice fixe (3) et l'embase (8) de la matrice mobile (11) sont constitués par des nervures aménagées sur la monture (1) ou respectivement l'embase (8) et des rainures correspondantes ménagées sur l'embase (8) ou respectivement la monture (1), de telle sorte que l'assemblage des pièces s'effectue par emboîtement et translation latérale des nervures dans les rainures.

5. Dispositif selon l'une des revendications 1 à 4, *caractérisé* en ce que la monture (1) de la matrice fixe (3) se présente sous la forme d'un étrier en U, ladite matrice (3) étant disposée dans le fond (la) du U de telle sorte que la monture vient chevaucher le fil (16) à redresser, les ailes (1b,1'b) du U venant de part et d'autre de ce dernier.

6. Dispositif selon l'ensemble des revendications 4 et 5, *caractérisé* en ce que les nervures et les rainures de solidarisation de la monture (1) et de l'embase (8) sont constituées respectivement, par des rebords (5,5') en équerre ménagés à l'extrémité des ailes (1b,1'b) de la monture (1) en U, et par des rainures (15,15') correspondantes en L ménagées dans l'embase (8).

7. Dispositif selon la revendication 6, *caractérisé* en ce que les rebords (5,5') en équerre des ailes (1b,1'b) de la monture (1) présentent des butées (6,6') à l'une de leurs extrémités pour servir de butées de fin de course de translation lors de l'assemblage de la monture (1) et de l'embase (8) de manière à assurer une retenue et un centrage des deux éléments assemblés.

8. Dispositif selon l'une des revendications 5 à 7, *caractérisé* en ce que les extrémités de la monture (1') sont partiellement fermées (1c,1'c) afin d'assurer juste le passage du fil (16) et ainsi son centrage longitudinal.

9. Dispositif selon l'une des revendications 5 à 8, *caractérisé* en ce que les ailes (1b,1'b) de la monture (1) sont partiellement ajourées (7) pour permettre d'apercevoir le fil (16) à redresser.

10. Dispositif selon l'une des revendications 1 à 9, *caractérisé* en ce que les matrices fixe (3) et mobile (11) sont disposées respectivement dans la monture (1) et sur le vérin d'actionnement (9,10) de manière amovible.

11. Dispositif selon l'une des revendications 1 à 10, *caractérisé* en ce que les profils des matrices (3,11) présentent une courbure centrale (R), convexe pour l'un et respectivement concave pour l'autre, avec des extrémités rectilignes (d) raccordées à ladite courbure centrale par des petites zones (r) courbées en sens inverse par rapport à ladite courbure centrale.

12. Dispositif selon l'une des revendications 1 à 11, *caractérisé* en ce que le vérin (9,10) est un vérin hydraulique.
